(19) Europäisches Patentamt
European Patent Office
Office européen des brevets

(11) Publication number: **0 028 665**
**B1**

(12) **EUROPEAN PATENT SPECIFICATION**

(45) Date of publication of patent specification: **18.05.83**

(51) Int. Cl.³: **C 07 F 7/14**, C 08 G 77/06

(21) Application number: **79302423.3**

(22) Date of filing: **02.11.79**

(54) **Process for the production of diaralkyldichlorosilanes and their use in manufacture of polysiloxane.**

(43) Date of publication of application:
**20.05.81 Bulletin 81/20**

(45) Publication of the grant of the patent:
**18.05.83 Bulletin 83/20**

(84) Designated Contracting States:
**CH DE FR GB**

(56) References cited:
**EP - A - 0 000 614**
**FR - A - 2 384 786**
**US - A - 2 954 390**

(73) Proprietor: **Chisso Corporation**
**6-32, Nakanoshima 3-chome Kitaku**
**Osaka-shi Osaka-fu (JP)**

(72) Inventor: **Ohtake, Nobumasa**
**10-2, Otsutomocho Kanazawaku**
**Yokohamashi Kanagawaken (JP)**
Inventor: **Koga, Isao**
**10-2, Otsutomocho Kanazawaku**
**Yokohamashi Kanagawaken (JP)**
Inventor: **Terui, Yohji**
**2505-3, Asahigaokacho**
**Chibashi Chibaken (JP)**

(74) Representative: **Ruffles, Graham Keith et al,**
**MARKS & CLERK 57-60 Lincoln's Inn Fields**
**London WC2A 3LS (GB)**

**EP 0 028 665 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Process for the production of diaralkyldichlorosilanes and their use in manufacture of polysiloxane

The present invention relates to novel organosilicon compounds, and in particular to the production of diaralkyldichlorosilanes.

Of the organosilicon compounds, diorganodichlorosilanes are very important compounds for use as bifunctional monomers in manufacturing polysiloxanes. Dialkyldichlorosilanes and diphenyldichlorosilanes have heretofore been generally known, but less has been reported on diaralkyldichlorosilanes. Dichlorosilanes having one aralkyl group are found, for example, in US Patent No 2 618 646, though in recent years, along with the development of the silicone resin industry, a need for novel organosilicon compounds with modified properties has arisen.

In specification publication No 614 of our European patent application No 78300045.8, we have described new dichlorosilane derivatives, including diphenethyldichlorosilane. Such compounds are produced by reacting a mono-substituted dichlorosilane $RHSiCl_2$ (where R is $C_3$—$C_{20}$ alkyl or phenethyl) at a temperature of 30 to 200°C with styrene using a catalytic complex of platinum and a phosphine compound.

The present inventors have now discovered a process for the preparation of alkylated derivatives of diphenethyldichlorosilane.

The compounds prepared by the present invention are diaralkyldichlorosilanes expressed by the general formula

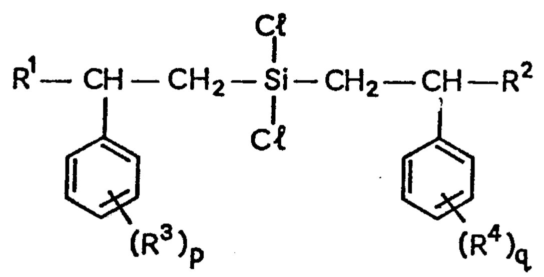

(I)

$R^1$ represents hydrogen or $C_1$ to $C_4$ alkyl, $R^2$ represents $C_1$ to $C_4$ alkyl, p and q are the same or different and each represents 0, 1, 2 or 3, when p or q is 1 then $R^3$ or $R^4$ is $C_1$ to $C_4$ alkyl and when p or q is 2 or 3 then each $R^3$ or $R^4$ is the same or different and is $C_1$ to $C_4$ alkyl. The compounds are thus alkyl substituted diphenethyldichlorosilanes.

Of the compounds expressed by the general formula (I), the preferred ones are those wherein p and q are both 0, i.e. di-β-phenylalkyldichlorosilanes (wherein the alkyls may be the same or different but not both ethyl); those wherein p and q are both 1, i.e. di-β-tolylalkyldichlorosilanes, and those wherein one of p and q is 0 and the other is 1, i.e. β-phenylalkyl, β-tolylalkyldichlorosilanes.

Concrete examples of the compounds prepared by the present invention include:

di-β-phenylpropyldichlorosilane
di-β-phenylbutyldichlorosilane
di-β-phenylpentyldichlorosilane
di-β-phenylhexyldichlorosilane
di-β-tolylethyldichlorosilane
di-β-tolylpropyldichlorosilane
di-β-tolylbutyldichlorosilane
di-β-tolylhexyldichlorosilane
β-tolylethyl.β-tolylpropyldichlorosilane
β-tolylethyl.β-tolylbutyldichlorosilane
β-tolylpropyl.β-tolylbutyldichlorosilane
β-phenylethyl.β-tolylethyldichlorosilane, and
β-phenylethyl.β-tolylpropyldichlorosilane.

The compounds are not restricted to those wherein p and q are selected from 0 and 1. For example the possible aralkyl substituents of compounds of the invention further include xylyl, e.g. 2,3-xylyl, where there are two methyl groups on the phenyl ring, and mesityl where there are three methyl groups on the phenyl ring.

Moreover, $R^3$ and $R^4$ need not be confined to methyl groups. For instance, the possible aralkyl substituents further include cumyl.

The present invention provides a process for producing the compounds of the general formula (I). The process is carried out as shown in the following equations (A) and (B):

Equation (A)

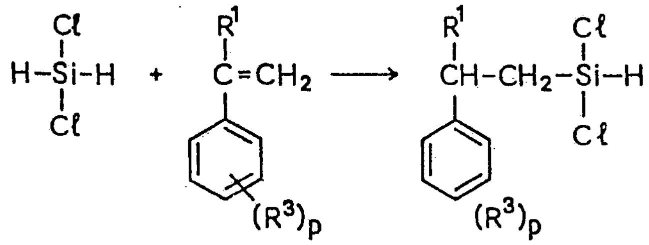

(II) (III) (IV)

Equation (B)

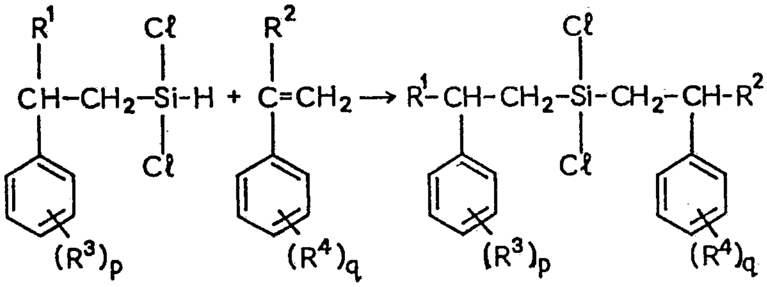

(IV) (V) (I)

(wherein $R^1$, $R^2$, p, q, $R^3$ and $R^4$ are as defined above).

Firstly, dichlorosilane (II) is subjected to an addition reaction with a styrene compound (III) which is styrene itself or a styrene derivative, at a temperature of 30 to 200°C in the presence of a catalyst which is a complex of rhodium and a phosphine compound, to form a monoaralkyldichlorosilane (IV), as shown in the above equation (A).

Next, this monoaralkyldichlorosilane (IV) is subjected to an addition reaction with a styrene compound (V) which is a styrene derivative, at a temperature of 10 to 200°C in the presence of a catalyst which is chloroplatinic acid to form a diaralkyldichlorosilane (I), as shown in the equation (B).

Concrete examples of the styrene derivatives include $\alpha$-methylstyrene, $\alpha$-ethylstyrene, $\alpha$-propylstyrene, $\alpha$-butylstyrene, methylstyrenes (vinyltoluenes), $\alpha$-methyl-methylstyrenes, $\alpha$-ethyl-methylstyrenes, $\alpha$-propyl-methylstyrenes, $\alpha$-butyl-methylstyrenes, etc. For methylstyrene and the methylstyrene derivatives, the ortho- meta- or para-compounds or mixtures thereof can be used.

The complex of a transition metal of group VIII of the Periodic Table and a phosphine compound is preferably a complex represented by the general formula of $MX_n(PR^o_3)_m$ wherein $R^o$ is phenyl (hereinafter abbreviated to Ph), aryl, alkyl or aralkyl; M is a metal selected from ruthenium, rhodium, nickel and platinum; X is a covalently bound halogen or hydrogen atom, a covalently bound substituted silyl group, or a non-covalently bound carbon monoxide molecule or aromatic hydrocarbon compound; *n* is an integer of 0 to 4 and *m* is an integer of 2 to 4, provided that $3 \leq (n+m) \leq 7$.

The transition metal phosphine compound complex can be, for instance, $RhH(PPh_3)_4$, $RhH(CO)(PPh_3)_3$, $RhCl(CO)(PPh_3)_2$, $RhCl(PPh_3)_3$, $RuCl_2(PPh_3)_3$, $RuHCl(PPh_3)_3[C_6H_6]$, $RuHCl(PPh_3)_3$-$[C_6H_5CH_3]$, $RuH_3(PPh_3)_3[Si(OCH_3)_3]$, $RuH_3(PPh_3)_3[Si(OCH_3)_2Ph]$, $RuH(PPh_3)_3[Si(C_2H_5)_2Cl]$, $RuH_2(PPh_3)_4$, $NiCl_2(PPh_3)_2$ or $Pt(PPh_3)_4$.

Particularly when the styrene derivatives has no substituent at the $\alpha$-position, the use of $Pt(PPh_3)_4$ is preferable.

The diaralkyldichlorosilanes of the present invention are novel compounds and useful as monomers for polysiloxanes for use in improving the properties of silicone oils and varnishes employed for electrical insulating materials, lubricating oils, water repellants, paints and lacquers, release agents, etc. Further it is possible to utilize them as intermediates for synthesizing novel organosilicon compounds.

Diaralkyldichlorosilanes of the present invention, when heated with water, form silanols and/or cyclic siloxanes, which in turn, when heated in the presence of an acid or a base as a catalyst, are polycondensed to form polymers. Further, it is also possible to hydrolyze at least one diaralkyldichlorosilane of the present invention together with at least one other organodichlorosilane and then copolycondense the resulting silanols and/or cyclic siloxanes.

The present invention is illustrated by the following non-limiting examples. Reference is made in Example 1 to the accompanying drawings, in which:

Figure 1 shows the infrared ray absorption spectra (abbreviated to IR) of the product of Example 1, di-$\beta$-phenylpropyldichlorosilane; and

Figure 2 shows the nuclear magnetic resonance spectra (NMR) of the product of example 1.

Example 1

$\alpha$-Methylstyrene (154 g 1.3 mol) and chlorotris(triphenylphosphine)rhodium $[RhCl(PPh_3)_3]$ (0.9 g $1.0 \times 10^{-3}$ mol) were introduced into a 500 ml stainless steel pressure reactor, which was then closed. The reactor was cooled in a dry ice-methanol bath, and dichlorosilane (101 g 1.0 mol) was introduced through an introduction tube and the reactor sealed. Reaction was carried out with stirring at 70°C for 7 hours. The resulting reaction liquid was distilled *in vacuo* to obtain 192 g of a product having a boiling point of 103°C/9.5 mmHg. The IR spectra of the product showed an absorption specific to Si—H at 2,205 $cm^{-1}$, and the NMR spectra proton signals of Si—H, $—CH_2—Si$, —CH— and $CH_3C_6H_5$ at 5.28, 1.54, 3.13, 1.35 and 7.19 $\delta$ (ppm) respectively. Thus it was confirmed that the product was mono-$\beta$-phenylpropyldichlorosilane $[CH_3CH(C_6H_5)CH_2SiHCl_2]$.

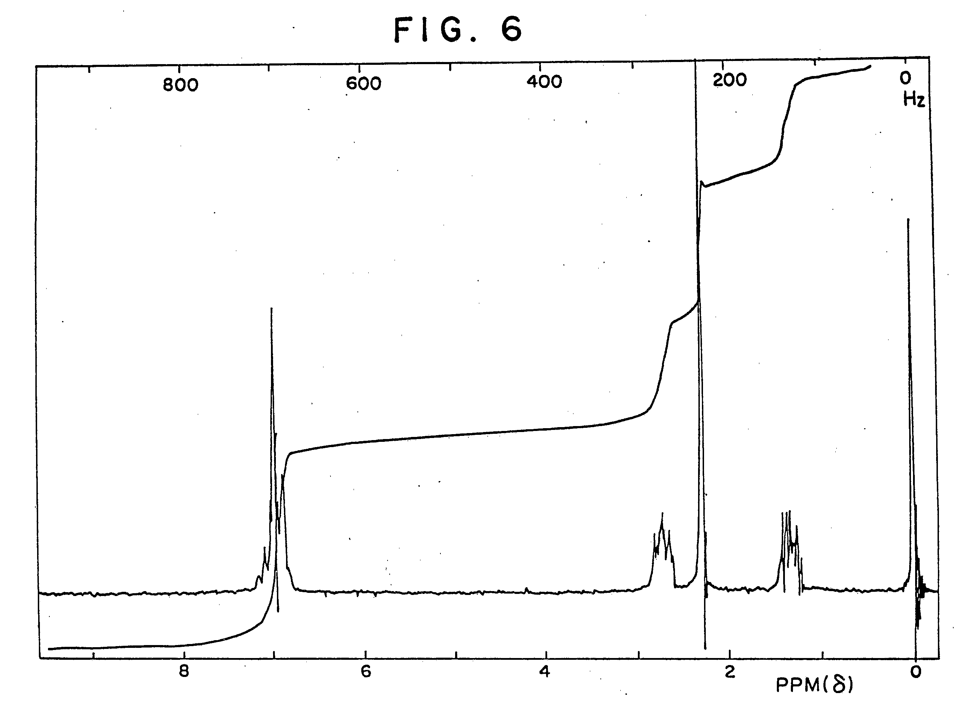

The $\beta$-phenylpropyldichlorosilane (66 g 0.3 mol), chloroplatinic acid (0.031 g, $6 \times 10^{-5}$ mol) and $\alpha$-methylstyrene (71 g, 0.6 mol) were fed into a flask to carry out reaction at 20—30°C for 5 hours. The reaction liquid was distilled *in vacuo* to obtain 85 g of a product having a boiling point of 160—161°C/2.5 mmHg. This product had an $n_D^{20}$ of 1.5446; its IR is shown in Figure 1 and its NMR in Figure 2. Thus it was confirmed that this product was di-$\beta$-phenylpropyldichlorosilane $[(C_6H_5.CH.CH_3CH_2)_2SiCl_2]$.

Example 2

Dichlorosilane (31.7 g, 314 millimols), styrene (56.3 g, 541 millimols) and chlorotris(triphenylphosphine)rhodium (0.2182 g, $2.36 \times 10^{-4}$ mol) were introduced into a 200 ml stainless steel reactor, which was then closed. Reaction was carried out with stirring on heating in an oil bath at 150°C for 20 hours. The resulting reaction liquid was distilled *in vacuo* to obtain 45.7 g of mono-$\beta$-phenylethyldichlorosilane.

The mono-$\beta$-phenylethyldichlorosilane (41 g, 0.2 mol), chloroplatinic acid (0.02 g, $4 \times 10^{-5}$ mol) and $\alpha$-methylstyrene (47.3 g, 0.4 mol) were fed into a flask to carry out reaction at 20—30°C for 5 hours to obtain $\beta$-phenylethyl.$\beta$-phenylpropyldichlorosilane.

Comparative Example 1

Dichlorosilane (30.9 g, 0.3 mol), styrene (56.5 g, 0.543 mol) and an isopropanol solution (50 ml) of chloroplatinic acid $[H_2PtCl_6.6H_2O]$ ($4.83 \times 10^{-6}$ mol) were introduced into a 200 ml stainless steel reactor. Reaction was carried out with stirring on heating in an oil bath at 50°C for 15 hours. The resulting reaction liquid resinified.

Example 3

Di-$\beta$-phenylpropyldichlorosilane (145 g) as obtained in Example 1 was dropwise added with stirring to 200 g of a water-diisopropyl ether mixture (water 165 g and diisopropyl ether 40 g) maintained at 60°C, over one hour, and after the addition, reaction was carried out with stirring for 4 hours. The aqueous phase portion of the resulting reaction liquid was removed, and the ether solution of the resulting product was washed five times with 50 ml of water. After the washed water became alkaline, 50 ml of toluene was added to the ether solution, and toluene, ether and water were removed by vaporization at 100°C *in vacuo* to obtain 105 g of a product.

To this product (96 g) were added 3.0 g of hexamethyldisiloxane, and further, with stirring, 1 ml of a 10% aqueous solution of tetramethylammonium hydroxide $[(CH_3)_4NOH]$ and 10 ml of toluene, and the mixture was heated up to 80°C. The water of the 10% aqueous solution was distilled off by blowing nitrogen gas into the reaction liquid, followed by reaction with stirring at 80°C for 10 hours. After the reaction, 75 ml of toluene was added to obtain a toluene solution, which was then washed three times, with 80 ml of water. After the solution became neutral, toluene was distilled off at 100°C to obtain 93.0 g of a polysiloxane.

## Claims

1. A process for producing a diaralkyldichlorosilane expressed by the general formula (I)

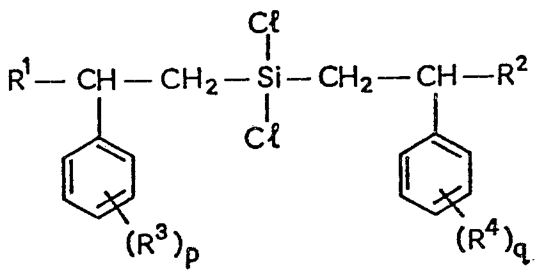

(I)

(wherein $R^1$ represents a hydrogen atom or an alkyl group having from 1 to 4 carbon atoms, $R^2$ represents an alkyl group having from 1 to 4 carbon atoms, p and q are the same or different and each represents 0, 1, 2 or 3, when p and/or q is 1 then $R^3$ and/or $R^4$, as the case may be, is an alkyl group having from 1 to 4 carbon atoms and when p and/or q is 2 or 3 then each $R^3$ and/or $R^4$, as the case may be, is the same or different and is an alkyl group having from 1 to 4 carbon atoms);

which process comprises:

subjecting dichlorosilane (II) to an addition reaction with a styrene compound (III) which is styrene itself, or a styrene derivative

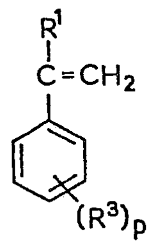

(III)

(wherein $R^1$, p and $R^3$ each have the same definition as above),

at a temperature of 30 to 200°C in the presence of a catalyst which is a complex of rhodium and a phosphine compound,

to form a monoaralkyldichlorosilane expressed by the general formula (IV)

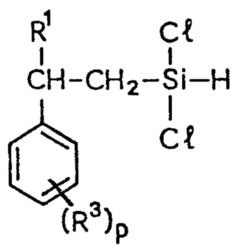

(IV)

and then subjecting the monoaralkyldichlorosilane to an addition reaction with a styrene compound (V)

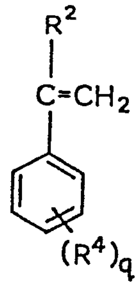

(V)

(wherein $R^2$, q and $R^4$ each have the same definition as above),

at a temperature of 10 to 200°C in the presence of a catalyst which is chloroplatinic acid.

2. A process for producing polysiloxanes which comprises hydrolyzing at least one diaralkyldichlorosilane produced by a process according to claim 1, optionally together with at least one other organodichlorosilane, followed by polycondensation.

3. A polysiloxane obtained by a process according to claim 2.

**Patentansprüche**

1. Verfahren zur Herstellung eines Diaralkyldichlorsilans der allgemeinen Formel (I)

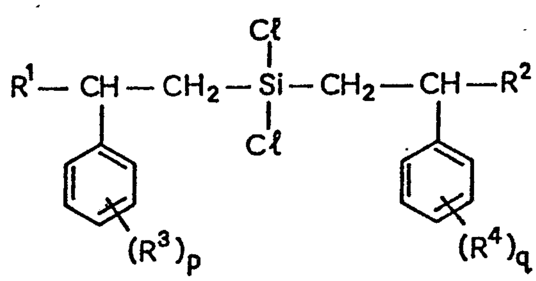

(I)

(darin bezeichnet $R^1$ ein Wasserstoffatom oder eine Alkylgruppe mit einem bis vier Kohlenstoffatomen; $R^2$ eine Alkylgruppe mit einem bis vier Kohlenstoffatomen; p und q sind gleich oder verschieden und stehen jeweils für die Zahl 0, 1, 2 oder 3, wenn p und/oder q gleich 1 sind, dann ist $R^3$ und/oder $R^4$, je nach dem, eine Alkylgruppe mit 1 bis 4 Kohlenstoffatomen und wenn p und/oder q gleich 2 oder 3 sind, dann ist jedes Radikal $R^3$ und/oder $R^4$, je nach dem, gleich oder verschieden und besteht aus einer Alkylgruppe mit 1 bis 4 Kohlenstoffatomen),

dadurch gekennzeichnet,

daß man Dichlorsilan (II) einer Additionsreaktion mit einer Styrolverbindung (III), die entweder aus Styrol selbst oder einem Styrolderivat besteht

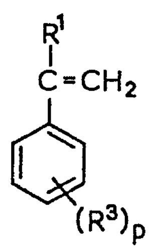

(III)

(wobei für $R^1$, p und $R^3$ jeweils die vorstehende Definition gilt)

bei einer Temperatur von 30° bis 200°C in Gegenwart eines Katalysators aussetzt, der in einem Rhodium-Komplex oder einer Phosphanverbindung besteht,

damit ein durch die nachstehende allgemeine Formel (IV) ausgedrücktes Monoaralkyldichlorsilan gebildet wird,

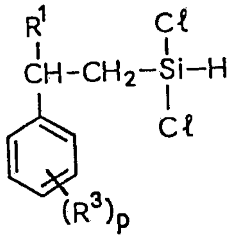

(IV)

und daß man dann das Monoaralkyldichlorsilan einer Additionsreaktion mit einer Styrolverbindung (V)

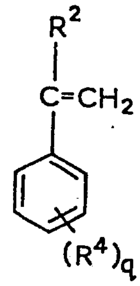

(V)

(bei der $R^2$, q und $R^4$ jeweils dieselbe Definition wie oben haben)

bei einer Temperatur von 10° bis 200°C in Gegenwart von Platinchlorwasserstoffsäure als Katalysator aussetzt.

2. Verfahren zur Herstellung von Polysiloxanen, das die Hydrolyse mindestens eines gemäß einem Verfahren nach Anspruch 1 erzeugten Diaralkyldichlorsilans umfaßt, und zwar wahlweise zusammen mit mindestens einem anderen Organodichlorsilan, mit anschließender Polykondensation.

3. Ein durch ein Verfahren gemäß Anspruch 2 erzeugtes Polysiloxan.

**Revendications**

1. Procédé pour produire un diaralkyldichlorosilane correspondant à la formule générale (I):

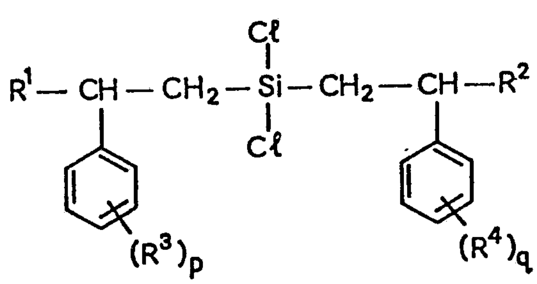

(I)

(dans laquelle $R^1$ représente un atome d'hydrogène ou un groupe alkyl ayant de 1 à 4 atomes de carbone, $R^2$ représente un groupe alkyl ayant de 1 à 4 atomes de carbone, les indices p et q ayant valeurs identiques ou différentes, égales chacune à 0, 1, 2 ou 3, lorsque la valeur de p et/ou de q est égale à 1, $R^3$ et/ou $R^4$, éventuellement, étant alors constitués par un groupe alkyl ayant de 1 à 4 atomes de carbone et lorsque la valeur de p et/ou de q est égale à 2 ou 3, chaque radical $R^3$ et/ou $R^4$, éventuellement, est identique ou différent et constitué par un groupe alkyl ayant de 1 à 4 atomes de carbone);

le procédé étant caractérisé en ce qu'il comporte les phases opératoires suivantes:

on soumet le dichlorosilane (II) à une réaction d'addition avec un composé à base de styrène (III), constitué de styrène proprement dit, ou d'un dérivé de styrène

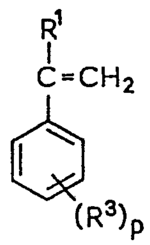

(III)

(dans lequel $R^1$, p et $R^3$, sont chacun tels que définis plus haut).

à une température de 30 à 200°C, en présence d'un catalyseur constitué par un complexe à base de rhodium et d'un composé de phosphine,

pour produire un monoaralkyldichlorosilane correspondant à la formule générale (IV):

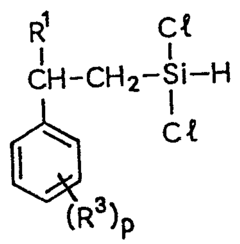

(IV)

et en ce qu'on soumet alors le monoaralkyldichlorosilane à une réaction d'addition avec un composé de styrène (V)

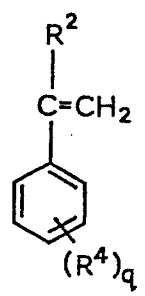

(V)

(dans lequel $R^2$, q, et $R^4$ sont chacun tels que définis ci-dessus),

à une température de 10 à 200°C, en présence d'un catalyseur constitué par de l'acide chloroplatinique.

2. Procédé pour produire des polysiloxanes, caractérisé en ce qu'il comporte un traitement d'hydrolyse appliqué à au moins un diaralkyldichlorosilane obtenu par un procédé conforme à la revendication 1, ce traitement pouvant optionnellement être appliqué en même temps à au moins un autre organodichlorosilane, ce traitement étant suivi d'une polycondensation.

3. Polysiloxane caractérisé en ce qu'il est obtenu par un procédé conforme à la revendication 2.

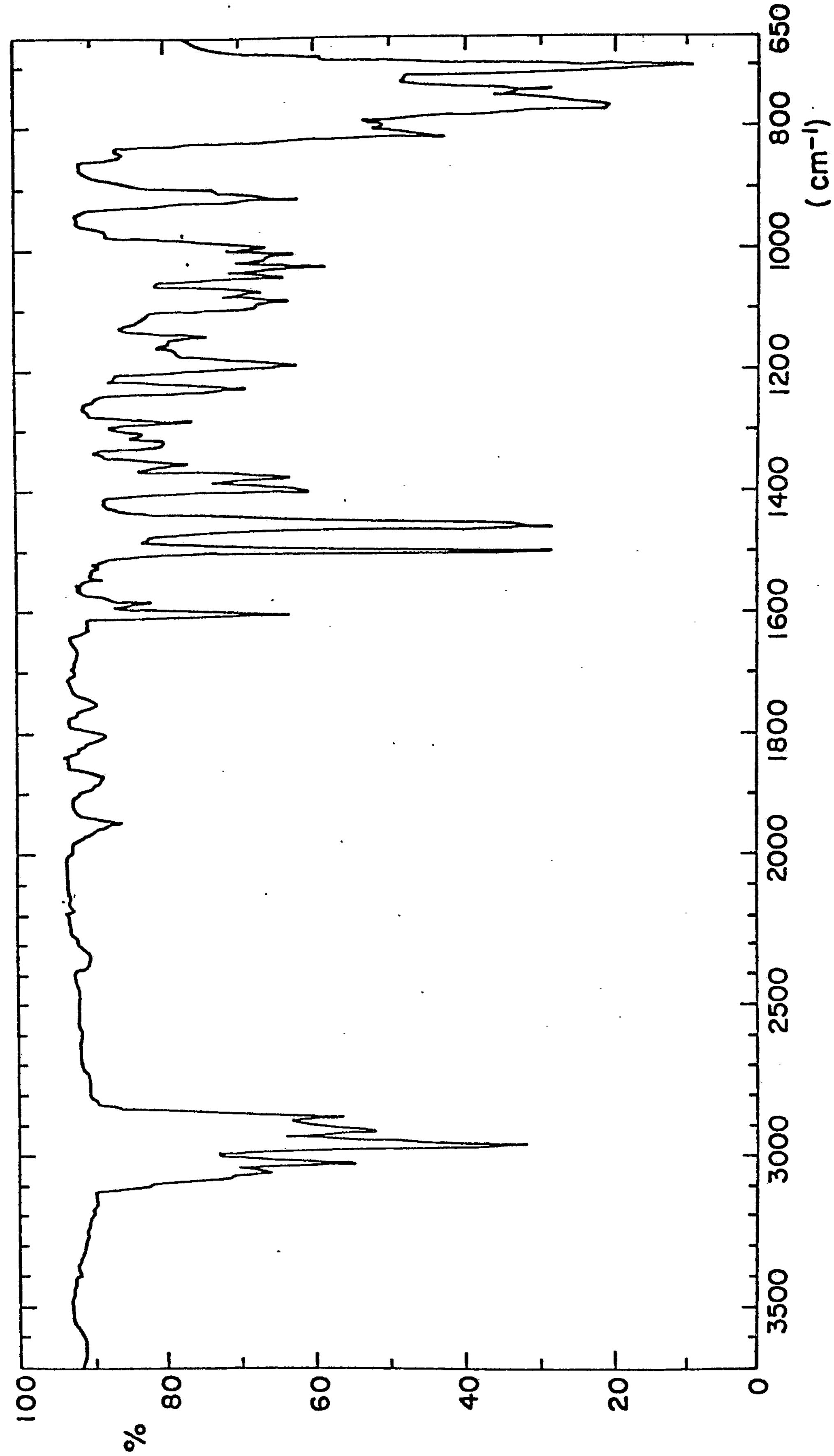
100
80
60
40
20
0
%
3500
3000
2500
2000
1800
1600
1400
1200
1000
800
650
(cm⁻¹)

FIG. 1

FIG. 2

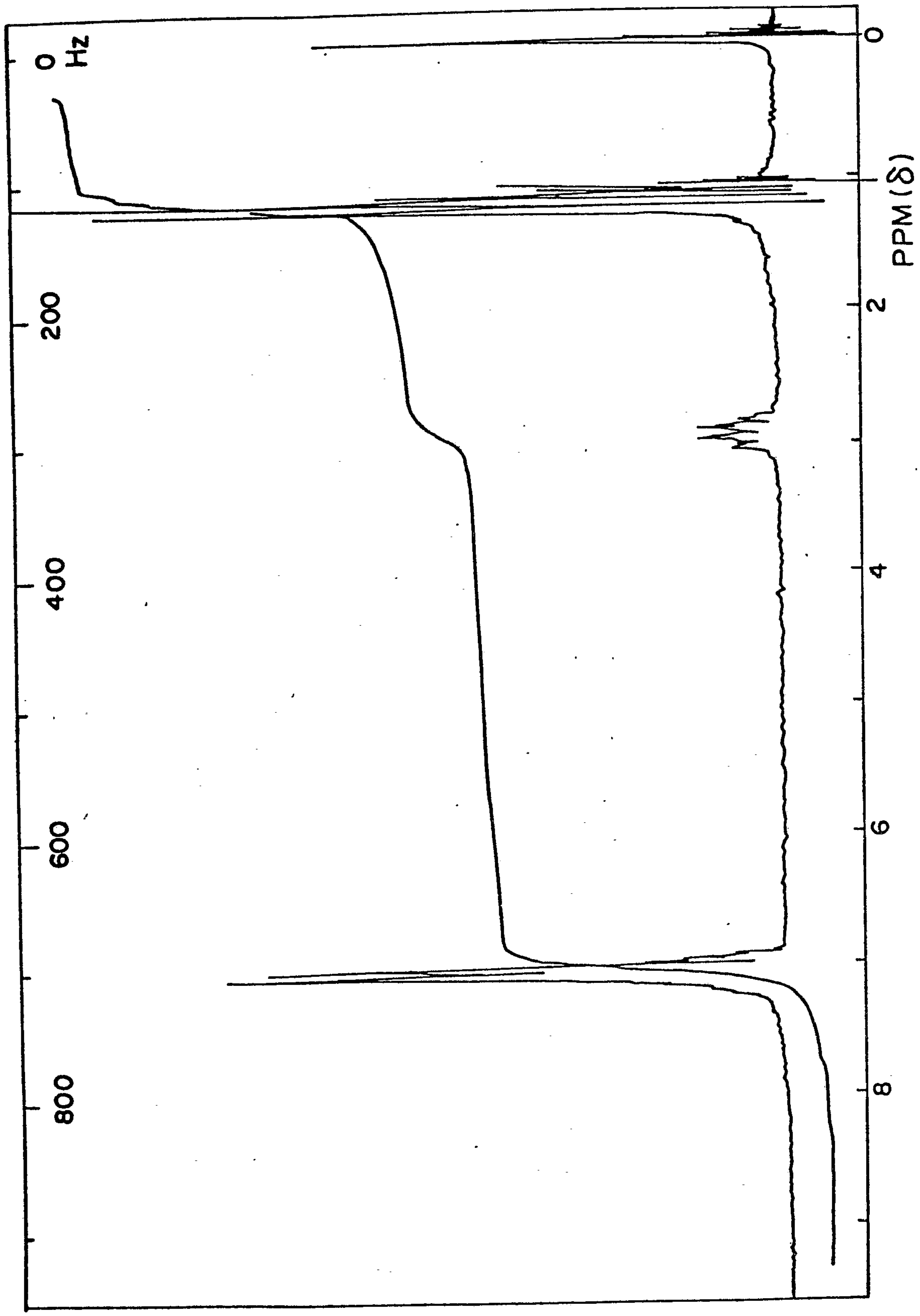

FIG. 3

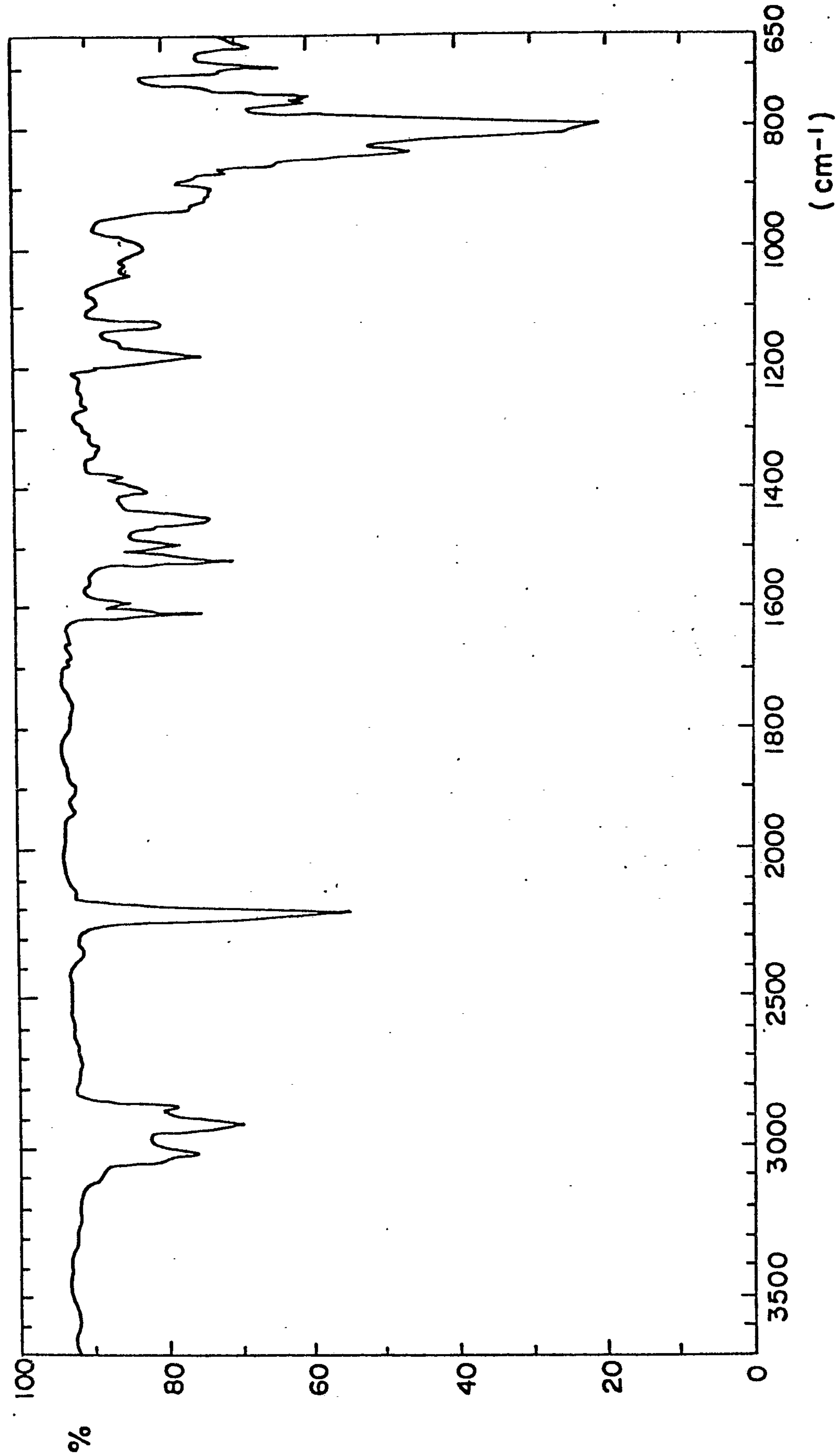
%
100
80
60
40
20
0
3500
3000
2500
2000
1800
1600
1400
1200
1000
800
650
(cm-1)

FIG. 4

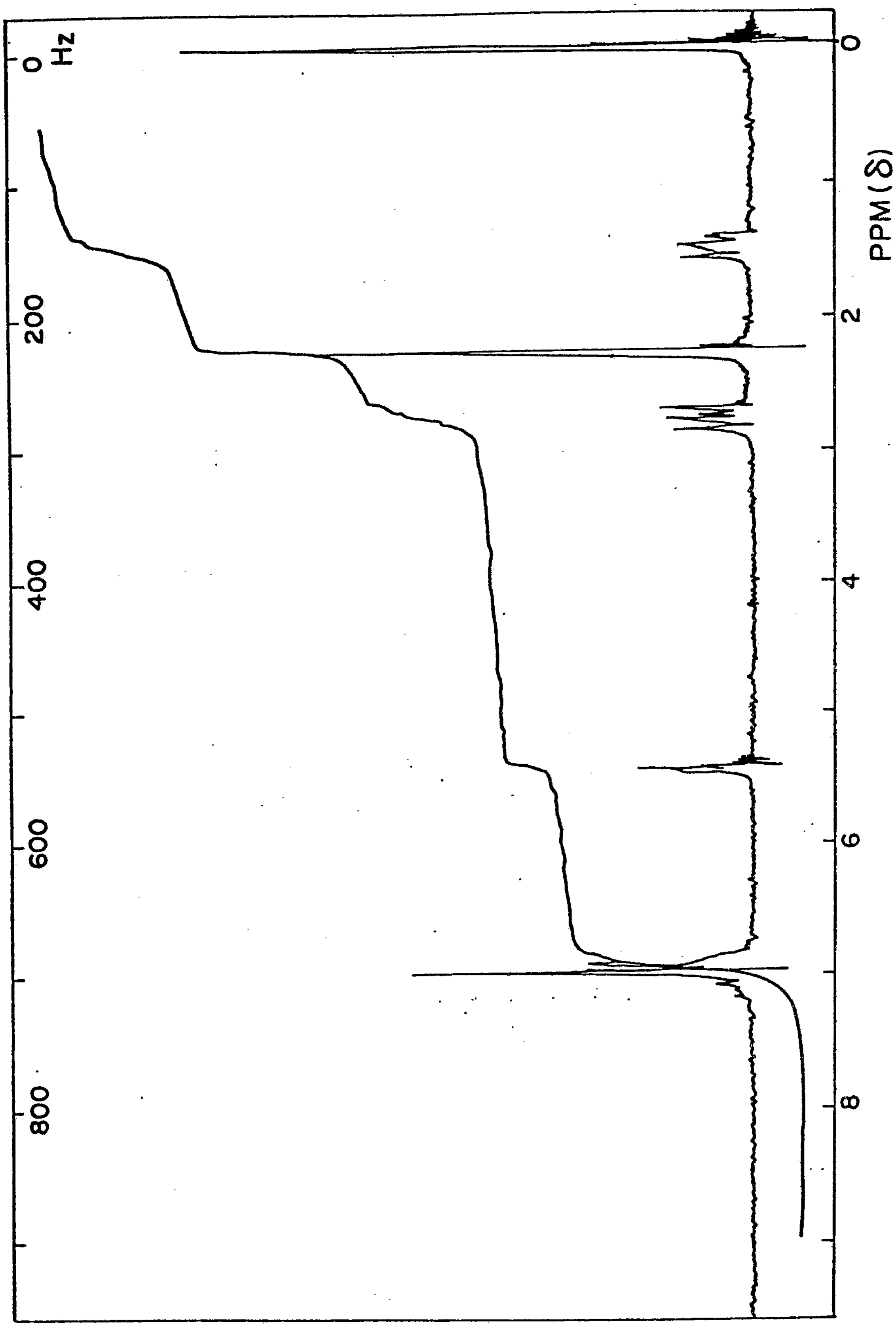

FIG. 5

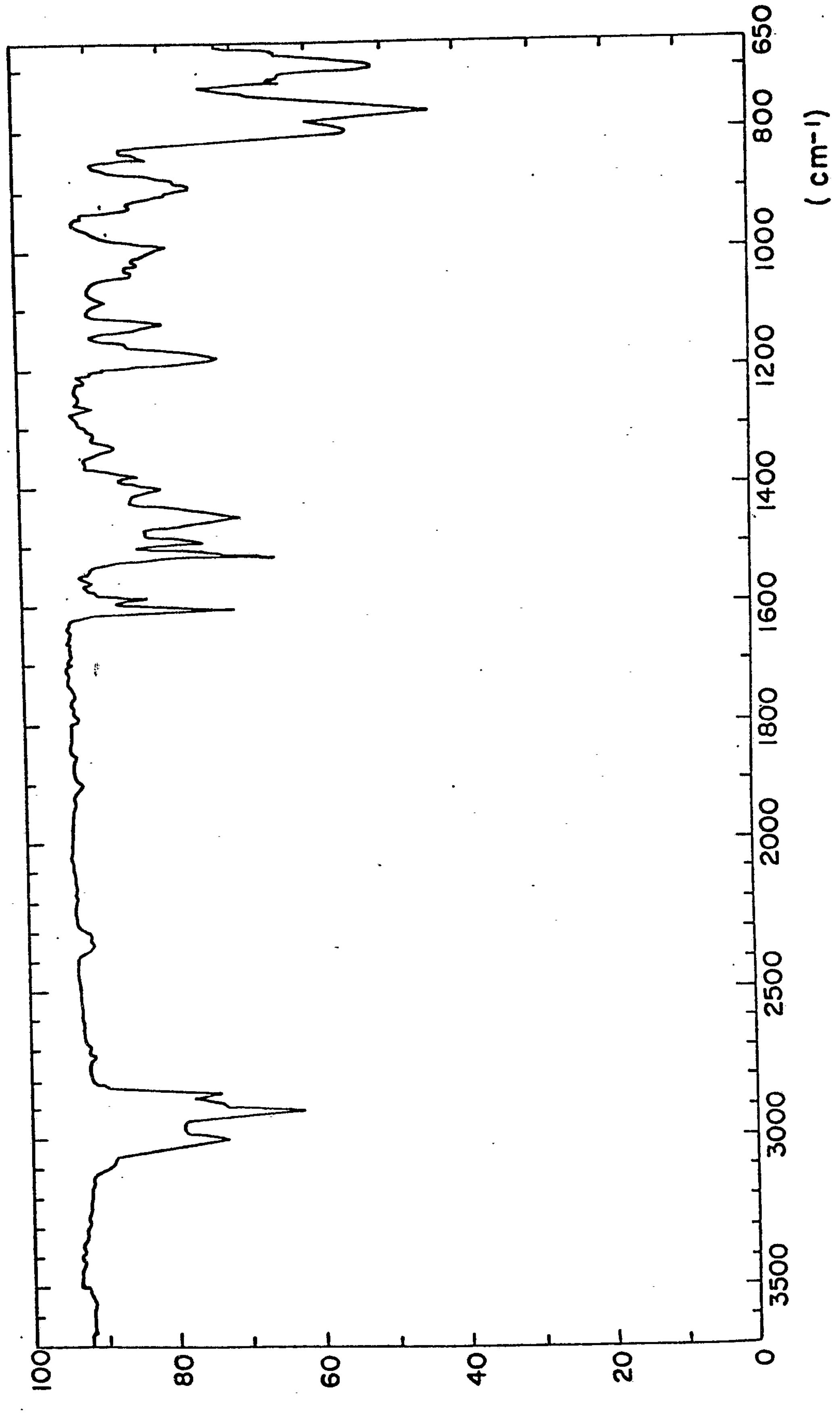
100
80
60
40
20
0
3500
3000
2500
2000
1800
1600
1400
1200
1000
800
650
( cm⁻¹ )

FIG. 6